# FASCICULE DE BREVET EUROPEEN

(11) **EP 3 529 577 B1**
(45) Date de publication et mention de la délivrance du brevet: **28.07.2021**
(21) Numéro de dépôt: 17797393.0
(22) Date de dépôt: 18.10.2017
(51) Int. Cl.: G01L 1/24, E21B 17/01

(54) **PROCÉDÉ DE SURVEILLANCE DE LA POUSSÉE D'UNE BOUÉE DE CONDUITE SOUS-MARINE**
VERFAHREN ZUR ÜBERWACHUNG DER ERHEBUNG EINER UNTERWASSERLEITUNGSBOJE
METHOD FOR MONITORING THE UPTHRUST OF A SUBSEA PIPELINE BUOY

(30) Priorité: 21.10.2016 FR 1660254
(43) Date de publication de la demande: 28.08.2019
(73) Titulaire: SAIPEM S.A., 78180 Montigny Le Bretonneux (FR)
(72) Inventeur: MAJDOUB, Taoufik, 93000 Bobigny (FR); PIONETTI, François-Régis, 50450 La Baleine (FR); SUNDERMANN, Axel, 91640 Fontenay-les-Briis (FR); AGOUMI, Jalil, 94270 Le Kremlin-Bicetre (FR)
(74) Mandataire: Cabinet Beau de Loménie
(86) Numéro de dépôt international: PCT/FR2017/052869
(87) Numéro de publication internationale: WO 2018/073539

(56) Documents cités:
- WO-A1-2009/158630
- WO-A1-2013/098546
- WO-A2-2014/016784
- GB-A- 2 533 123
- US-A1- 2004 035 216
- US-A1- 2011 292 384
- US-A1- 2014 338 918
- US-A1- 2016 084 065
- US-A1- 2016 161 350

## Description

### Arrière-plan de l'invention

La présente invention se rapporte au domaine général des conduites sous-marines de transport de fluides assurant la liaison fond-surface pour le transfert d'hydrocarbures, par exemple de pétrole et de gaz, issus de puits de production sous-marins. Plus particulièrement, la présente invention se rapporte au domaine général des conduites sous-marines de transport du type conduites rigides connues sous la dénomination de riser y compris du type SCR (« steel catenary riser ») ou des conduites flexibles.

Les conduites sous-marines de transport de fluides sont couramment utilisées dans la production offshore d'hydrocarbures. Ainsi, dans un champ de production offshore, on exploite généralement plusieurs puits qui peuvent être séparés les uns des autres de plusieurs kilomètres, voire dizaines de kilomètres. Les fluides issus des divers puits doivent être collectés par des conduites posées au fond de la mer et transférés par des conduites de liaison fond-surface depuis une conduite sous-marine reposant au fond de la mer vers une installation en surface qui va les recueillir, par exemple au niveau d'un navire ou d'un point de collecte situé sur la côte.

L'invention s'intéresse plus particulièrement aux conduites équipées de flotteurs ou bouées immergés le long d'une partie au moins de la conduite pour en assurer le tensionnement entre le fond et la surface pour exercer sur la conduite une tension permettant de maintenir la conduite en position de liaison fond-surface, le cas échéant en position verticale.

Plus particulièrement, on met en œuvre des bouées entourant la conduite coaxialement. Typiquement, un module de bouée a généralement une forme cylindrique, creux ou plein et constitué en une seule ou en plusieurs parties, notamment deux demi-bouées, formant une bouée cylindrique entourant la conduite coaxialement, une fois assemblée(s). Plus particulièrement encore, on met en œuvre des ensembles de bouées disposées en chapelet le long d'une partie au moins de la conduite.

Généralement, les bouées utilisées pour les conduites sous-marines de transport de fluides dans la production offshore d'hydrocarbures offshore sont en mousse par exemple en PU ou PP syntactique.

Ces installations sous-marines et équipements restant sous l'eau à de grandes profondeurs pour de longues durées (20 ans et plus), les bouées installées doivent donc également tenir ces exigences de contraintes mécaniques élevées pour résister à la pression du fond de la mer. En effet, la pression de l'eau étant sensiblement de 0.1 MPa, soit environ 1 bar pour 10 m de profondeur, la pression à laquelle doivent résister les conduites sous-marines est alors d'environ 10 MPa, soit environ 100 bars pour 1000 m de profondeur et d'environ 30 MPa, soit environ 300 bars pour 3000 m de profondeur.

Or, l'expérience montre que ces bouées se détériorent avec le temps. Et, la détérioration de la bouée immergée au cours du temps induit une diminution de la flottabilité et donc de la poussée exercée par la bouée, qui peut être liée à une détérioration du matériau de flottabilité constituant la bouée et/ou une variation de volume de la bouée, résultant de la compression à laquelle elle est soumise en particulier à grande profondeur. Dans le cas des bouées à base de mousse syntactique, cette détérioration de la bouée peut être due à l'infiltration d'eau dans la bouée causant une hydrolyse des billes de verre contenues dans la bouée.

On connait les systèmes de mesure de déformation de fibre optique par exemple déformation de courbure ou déformation de longueur. Dans le cas d'une fibre à réseaux de Bragg, un faisceau lumineux est envoyé dans la fibre, une onde est réfléchie à chaque réseau de Bragg, la longueur d'onde de cette onde réfléchie est dépendante du pas du réseau et de l'indice de réfraction du cœur de la fibre. Les réseaux ayant des pas différents, on peut ainsi différencier les ondes réfléchies. Du fait que les variations de contrainte et de température affectent à la fois l'indice de réfraction et le pas du réseau, ce qui se traduit par un décalage de la longueur d'onde réfléchie, on associe à cette fibre à réseaux de Bragg une fibre du type à effet Raman pour décorréler la variation du signal due à la déformation de la fibre de la variation du signal due à la variation de la température. Dans le cas d'une fibre à rétrodiffusion de Brillouin, un faisceau lumineux est envoyé dans la fibre, l'onde rétrodiffusée subit un décalage fréquentiel dépendant de la variation de température et de déformation. Il faut donc aussi associer cette fibre d'une fibre du type à effet Raman (qui mesure uniquement la variation de température) pour décorréler la variation du signal due à la déformation de la fibre de la variation du signal due à la variation de la température. La technologie de mesure de déformation par fibre optique permet, à partir d'un laser traversant la fibre, d'obtenir l'élongation de la fibre et donc la déformation du matériau en contact de la fibre. Une fibre optique peut mesurer une micro déformation et cette dernière peut être reportée à l'aide de réseaux de Bragg ou en utilisant la rétrodiffusion de Brillouin. Dans le cas d'extensomètre à réseaux de Bragg, lorsque la fibre optique subit une déformation, le pas du réseau de Bragg (microstructure gravée dans le cœur de la fibre) change et la réflexion de la lumière s'en trouve modifiée.

Le but de la présente invention est de fournir un procédé pour surveiller et évaluer en temps réel la poussée des bouées de flottabilité des conduites sous-marine de liaison fond-surface au cours de leur vie afin de pouvoir les changer si nécessaire.

US 2016/161350 décrit un procédé de détermination des contraintes d'une structure support, à savoir une conduite, sur laquelle une fibre optique est enroulée hélicoïdalement. On mesure la déformation de la fibre pour étudier les contraintes sur la conduite et non pas les conséquences de celles-ci sur une éventuelle dégradation des propriétés de poussée d'une bouée montée sur la conduite

Dans WO 2009/158630, on utilise une fibre optique pour mesurer les caractéristiques d'une émission acoustique résultant d'une fuite de fluide dans une conduite et estimer le diamètre de l'orifice de la fuite et le débit de celle-ci.

Dans US 2014/338918, on décrit des moyens de contrôler et d'ajuster la flottabilité d'une chambre de flottabilité en fonction des variations de tensions verticales appliquées sur les conduites de forage au niveau d'un puits de forage au fond de la mer. On fait volontairement varier la flottabilité du flotteur en ajustant les quantités de gaz ou de fluide contenues dans le flotteur par des opérations de ballastage / déballastage. Pour ce faire, dans un mode de réalisation, on mesure le signal d'un capteur de charge disposé au niveau d'une butée sur laquelle s'applique la poussée du flotteur (voir paragraphe 40, page 4 colonne de gauche). Toutefois, on ne décrit, ni ne suggère de mesurer la déformation d'une fibre optique appliquée dans ou sur une pièce de butée déformable élastiquement par compression pour surveiller la variation de la poussée exercée par une bouée sur une conduite sur laquelle elle s'applique afin de contrôler l'état de la bouée.

WO 2014/016784 décrit un procédé de surveillance de la flottabilité d'un flotteur exerçant une traction sur une conduite. Il est envisagé (voir paragraphe 33) que le détecteur de contrainte soit une fibre optique mais sans précision sur les modalités de mise en œuvre.

Dans US 2011/292384, on décrit la détection de contrainte au niveau du revêtement d'une conduite souple à l'aide de fibre optique.

Dans US 2016/084065, WO2013/098546 et US 2004/035216, on décrit des capteurs de mesure de différents paramètres incluant des tensions et vibrations à l'aide d'une fibre optique appliquée sur un riser, sans évoquer ni suggérer la mesure de la variation de poussée d'une bouée montée sur ladite conduite.

La présente invention fournit un procédé de surveillance de la variation au cours du temps de la poussée exercée par au moins une bouée montée sur une conduite sous-marine de liaison fond-surface et exerçant une traction sur la dite conduite, comprenant la réalisation des étapes suivantes dans lesquelles :
1) on mesure la déformation d'au moins une fibre optique en mesurant la variation du signal optique dans la fibre optique par rapport à une valeur de référence du signal optique, la dite fibre optique s'étendant au moins en partie dans une direction ayant une composante parallèle à la direction de la force de poussée exercée par la dite bouée sur la dite conduite, la dite fibre optique étant appliquée solidairement, de préférence par collage, sur la surface ou de préférence noyée solidairement dans la masse d'un matériau constitutif d'au moins une pièce de butée solidaire de ladite conduite ou de la bouée et sur laquelle la dite bouée exerce la dite poussée, ladite pièce de butée étant une pièce de butée intercalaire déformable élastiquement, disposée entre (i) une partie de la bouée et (ii) une pièce rigide de retenue solidaire de la dite conduite, la poussée exercée par ladite bouée venant comprimer la dite pièce de butée intercalaire, et
2) on détermine une variation de la dite poussée exercée par la dite bouée en fonction de ladite variation du signal optique telle que mesurée à l'étape 1) par rapport à une valeur du signal optique correspondant à une poussée initiale maximale de la bouée.

En particulier, la dite valeur de référence du signal optique est la valeur initiale mesurée une fois la conduite juste posée en mer, car c'est à ce moment qu'on a une poussée d'Archimède maximale. Toutes les autres mesures seront comparées à cet état initial.

En pratique et à titre illustratif, on peut juger nécessaire de remplacer la bouée s'il y a une diminution de 20% de la poussée (donc une variation déterminée correspondante de la mesure du signal optique).

On comprend que la dite fibre optique est connectée à une fibre optique qui peut être intégrée à un ombilical, véhiculant le signal optique, de préférence le long de la conduite, notamment pour le monter en surface ou le descendre au fond de la mer.

Avantageusement, on peut réaliser, en atelier, une étape d'étalonnage à partir de mesures de déformations de fibres réalisées en corrélation avec des variations connues de valeurs de poussées exercées par la dite bouée comprenant une dite fibre, les dites poussées pouvant être mesurées par des moyens mécaniques (ressorts) ou électroniques (jauges de contrainte)

Plus particulièrement, à l'étape 1), on mesure la déformation d'au moins une fibre optique en utilisant au moins la rétrodiffusion de Brillouin ou une fibre optique à réseaux de Bragg, en mesurant la variation de la fréquence de l'onde rétrodiffusée ou respectivement la variation de la longueur d'onde de l'onde réfléchie du signal optique réfléchi dans la fibre optique par rapport à une valeur de référence du signal optique de l'onde rétrodiffusée ou respectivement de l'onde réfléchie, et de préférence on associe à la dite fibre optique une fibre du type à effet Raman, notamment en cas de variation de température pour décorréler la variation du signal due à la déformation de la fibre de la variation du signal due à la variation de la température.

En pratique cette mesure de la variation de poussée d'Archimède est rendue possible car les matériaux mis en œuvre comme matériau constitutifs des bouées à savoir des matériaux synthétiques à base de PP ou PU, de préférence de la mousse syntactique, ou l'acier pour les conduites (acier) peuvent connaitre des déformations pour les niveaux de poussées mises en œuvre sur la conduite par une bouée ou un ensemble de bouée à savoir typiquement de 0.5 à 5 Tonnes, et à ces niveaux de poussée la déformation des dits matériaux constitutifs des bouées ou pièces de butée comprimés ou déformation des conduites en traction reste inférieure à la déformation maximale autorisée de la fibre optique, à savoir typiquement aux alentours de 1% en traction et 10% en compression. Mais ce problème peut être déjoué en utilisant une fibre posée de façon non rectiligne telle qu'en hélice comme décrit ci-après. Donc la pose de la fibre doit être adaptée au matériau. Si le matériau est rigide et s'allonge moins que la fibre, une fibre posée de façon droite peut fonctionner. Si le matériau est très déformable et qu'il se déforme plus que la fibre, la fibre ne peut pas être posée de façon droite mais en hélice par exemple.

Si la fibre optique est appliquée sur ou dans un élément support constitué d'un matériau élastique de la dite pièce de butée, la dite fibre est déformée par compression comme les éléments supports concernés.

Il y a lieu de noter que le flotteur n'est soumis de manière sensible à la houle, au courant et au déplacement du flotteur, que si sa profondeur est de moins de 50 m. D'autre part, et en tout état de cause, ces sollicitations sont dynamiques et les variations de leurs composantes dans l'axe de poussée du flotteur sont rapides de sorte qu'elles peuvent être aisément filtrées pour ne laisser apparaitre que la déformation de la fibre et du support causée par la variation de poussée de la bouée laquelle est beaucoup plus lente.

De préférence, la dite fibre optique est disposée dans ou à la surface d'une dite pièce de butée qui est une pièce de butée intercalaire déformable élastiquement en matériau élastomère, la dite bouée étant appliquée contre la pièce intercalaire initialement comprimée, et on détermine une diminution de la poussée de la bouée au cours du temps par expansion élastique de la dite pièce intercalaire découlant de la diminution de la compression et variation de volume de la pièce de butée intercalaire, la dite bouée étant constituée d'un matériau de flottabilité plus rigide que celui de la pièce de butée intercalaire et qui ne connait pas de déformation en élongation en cas de dégradation se traduisant par une diminution de la poussée exercée par ladite bouée.

On comprend que la pièce rigide de retenue sert de retenue en translation de la dite pièce de butée et donc de la dite bouée.

Dans ce mode de réalisation, la bouée est appliquée contre la pièce intercalaire initialement comprimée, la pièce intercalaire est de moins en moins comprimée au cours du temps lorsqu'il y a diminution de la poussée de la bouée au cours du temps. Ce mode de réalisation dans lequel la fibre optique est collée en surface ou noyée dans la masse d'une pièce de butée intercalaire en matériau élastomère est plus particulièrement avantageux car un tel matériau élastomère permet, même étant de dimension réduite de 5 à 50 mm d'épaisseur dans la direction verticale, de détecter une diminution de poussée par expansion élastique de la dite pièce intercalaire découlant de la diminution de la compression et variation de volume de la pièce de butée intercalaire dans des circonstances où un matériau de flottabilité plus rigide comme celui constitutif de la bouée ne connaitrait pas de variation de volume ou l'acier de la conduite ne connaitrait pas de déformation en élongation et ne permettrait pas de détecter une variation de poussée. Il peut arriver en particulier que la mousse syntactique de la bouée perde de la flottabilité par dégradation de la mousse et des billes de verre qu'elle contient mais ne varie pas de volume du fait du remplacement de la mousse et du verre par l'eau environnante par porosité.

Plus particulièrement, la dite bouée est de forme en partie cylindrique ou pseudo-cylindrique disposée autour de la conduite et coaxialement à celle-ci.

Ce type de bouée est en général solidarisé par friction à la conduite par des colliers de serrage. Le nombre et la position des bouées le long d'une conduite peuvent varier selon l'installation et dépendent de la méthode de pose, profondeur, type de conduite à poser.

Plus particulièrement, une dite cavité centrale de la bouée traversée par la conduite présente une partie de paroi de forme complémentaire à la forme de ladite pièce rigide de retenue apte à bloquer la bouée en translation dans la direction longitudinale de la conduite.

Dans un mode de réalisation particulier, la dite pièce rigide de retenue est constituée par une collerette périphérique supérieure en acier entourant la dite conduite et servant de retenue en position de la dite bouée disposée coaxialement autour de la conduite et dessous ladite collerette, la dite pièce intercalaire de butée de forme annulaire étant disposée coaxialement en sous face de la dite pièce rigide de retenue.

Dans ce mode de réalisation, l'ensemble de ladite collerette et de la dite pièce intercalaire de butée de forme annulaire disposée coaxialement en sous face de la dite pièce rigide de retenue peut coopérer avec une forme creuse complémentaire d'une surface interne d'une cavité centrale de la dite bouée en vis-à-vis de la surface externe de la conduite.

Dans ce mode de réalisation, la dite bouée (ou une pluralité de bouées en enfilade) peut (ou peuvent) être montée(s) coulissante(s) autour de la conduite étant bloquée en translation par la collerette qui transmet la poussée des bouées à la conduite.

Dans un autre mode de réalisation particulier, la dite pièce rigide de retenue est constituée par une collerette périphérique inférieure en acier entourant la dite conduite et servant de retenue en position de la dite bouée disposée coaxialement autour de la conduite et dessus ladite collerette, la dite pièce intercalaire de butée de forme annulaire étant disposée coaxialement en sous face de la dite pièce rigide de retenue.

Dans ce mode de réalisation la dite bouée peut être fixée à la dite conduite par un élément de serrage au niveau de son extrémité inférieure qui est appliquée contre et en sous face de ladite pièce de butée comprimée.

Dans un autre mode de réalisation particulier, la dite pièce rigide de retenue est constituée par un épaulement en acier en surface de la conduite, l'ensemble du dit épaulement et de la dite pièce intercalaire de butée de forme annulaire disposée coaxialement en sous face de la dite pièce rigide de retenue coopérant avec une forme creuse complémentaire d'une surface interne de la cavité centrale de la dite bouée en vis-à-vis de la surface externe de la conduite, le dit épaulement servant de retenue en position de la dite bouée disposée coaxialement et autour de la conduite et du dit épaulement.

On distingue ici arbitrairement un «épaulement» d'une «collerette» en ce que l'épaulement est une protubérance radiale qui s'étend sur une distance plus importante dans la direction longitudinale de la conduite ou bouée coaxiale d'une part et que d'autre part, la bouée entoure entièrement l'épaulement.

Le dit épaulement peut être une protubérance radiale venant de matière avec la surface de la conduite ou rapportée à la surface de la conduite avec des éléments de serrage, notamment sous forme de deux demi-pièces de retenue demies cylindriques rapportées et fixées l'une contre l'autre et contre la conduite par une ceinture ou clamp.

On comprend que la bouée ne peut plus translater ni coulisser axialement au-delà de l'épaulement ou collerette et l'effort de poussée de la bouée est transmis à la conduite via une surface d'appui de l'épaulement ou collerette et éventuellement la surface extérieure de la conduite en vis-à-vis d'un élément de serrage de la bouée contre la conduite.

Plus particulièrement, la dite collerette ou dit épaulement peuvent s'étendre de manière continue ou discontinue circulairement autour de la conduite avec une surépaisseur de 5 à 50 mm par rapport à la surface de la conduite.

Plus particulièrement encore, la dite collerette ou dit épaulement peuvent être disposés au niveau d'une pièce de jonction forgée assurant la jonction par soudage entre deux éléments unitaires de conduite de la dite conduite.

Dans une variante de réalisation, la fibre s'étend hélicoïdalement et coaxialement en surface ou à l'intérieur du dit élément support. Ce mode de réalisation de la disposition en hélice de la fibre optique est préférable car la pose en hélice donne une courbe de fibre acceptant de plus grande déformation du dit élément support et plus particulièrement de la pièce déformable et il permet de mettre en œuvre une seule fibre. La déformation de la fibre optique dans la direction axiale de la poussée est en effet diminuée d'un facteur correspondant au cosinus de l'angle du pas de l'hélice.

Dans une variante de réalisation, la fibre optique s'étend sinusoïdalement ou en ondulations ou zig-zag le long d'une partie au moins de la circonférence, de préférence toute la circonférence, en surface ou à l'intérieur du dit élément support.

On comprend que l'axe d'amplitude de la sinusoïde ou des ondulations correspond à l'axe de la bouée et conduite et l'axe de la période de la sinusoïde est circulaire. Ce mode de réalisation de la disposition en sinusoïde de la fibre optique est aussi avantageux car la pose sinusoïdale donne aussi une courbe de fibre acceptant de grande déformation du dit élément support et plus particulièrement de la pièce déformable et permet de mettre en œuvre une seule fibre.

Dans une variante de réalisation, la fibre optique s'étend sur une surface torique, de préférence par enroulement de la fibre sur un tore imaginaire ou sur un support torique de diamètre inférieur à l'épaisseur du dit élément support, de préférence située dans ladite butée intercalaire.

Dans une variante de réalisation, on met en œuvre une pluralité de fibres optiques s'étendant de manière rectiligne dans la dite direction coaxiale du dit élément support.

Plus particulièrement, on met en œuvre une pluralité de fibres optiques rectilignes disposées régulièrement le long de la circonférence du dit élément support comprenant la dite bouée ou de préférence la surface de la conduite.

Dans ce mode de réalisation, la pluralité de fibres est avantageuse pour détecter des déformations sur toute la périphérie ou circonférence de la conduite ou bouée.

La présente invention fournit également une installation de liaison fond-surface utile dans un procédé selon l'invention, comprenant une conduite sous-marine de liaison fond-surface équipée d'au moins une bouée exerçant une traction sur la dite conduite, et au moins une fibre optique apte à permettre de mesurer sa déformation en mesurant la variation du signal optique dans la fibre optique par rapport à une valeur de référence du signal optique, la dite fibre optique s'étendant au moins en partie dans une direction ayant une composante parallèle à la direction de la force de poussée exercée par la dite bouée sur la dite conduite, la dite fibre optique étant appliquée solidairement, de préférence par collage, sur la surface ou noyée solidairement dans la masse d'un matériau constitutif d'au moins une pièce de butée solidaire de ladite conduite ou de la bouée et sur laquelle la dite bouée exerce la dite poussée, ladite pièce de butée étant une pièce de butée intercalaire déformable élastiquement, disposée entre (i) une partie de la bouée et (ii) une pièce rigide de retenue solidaire de la dite conduite, la poussée exercée par ladite bouée venant comprimer la dite pièce de butée intercalaire, et
- la dite fibre optique est connectée à une fibre optique véhiculant le signal optique, notamment dans un ombilical contenant une fibre optique, de préférence le long de la conduite.

Plus particulièrement, ladite installation comprend une pluralité de dites bouées de forme en partie cylindrique ou pseudo-cylindrique disposées en enfilade ou espacées en chapelet autour de la conduite et co-axialement à elle, et au moins une fibre optique pour mesurer la poussée de respectivement chaque bouée, de préférence une même fibre optique pour toutes les bouées.

Plus particulièrement, la ou chaque bouée est constituée de plusieurs éléments de bouée, de préférence sous forme de deux demi modules de bouée de formes demi cylindrique, aptes à être disposés l'un vis à vis de l'autre de manière à entourer la conduite.

Plus particulièrement, au moins une fibre optique est disposée dans ou à la surface d'une dite pièce de butée intercalaire déformable élastiquement qui est de forme annulaire et en matériau élastomère, la poussée exercée par ladite bouée venant comprimer la dite pièce de butée intercalaire, ladite partie de dite cavité centrale de la bouée présentant une forme complémentaire à la forme de l'ensemble de la dite pièce de butée et de ladite pièce rigide de retenue apte à bloquer la bouée en translation dans la direction longitudinale de la conduite.

Plus particulièrement, la dite bouée est appliquée contre la pièce intercalaire initialement comprimée, la dite bouée étant constituée d'un matériau de flottabilité plus rigide que celui de la dite pièce de butée intercalaire et qui ne connait pas de déformation en élongation en cas de dégradation se traduisant par une diminution de la poussée exercée par ladite bouée.

De préférence, la ou les fibres optiques de différents éléments support d'une pluralité de bouées en enfilade ou chapelet est ou sont reliés en série et à un même ombilical de transmission des signaux optiques à un dispositif d'émission - réception et mesure de signal optique, de préférence en surface.

Dans ce mode de réalisation, du fait que l'on connait le temps de retour du signal, et à partir de la vitesse de la lumière, il est possible de déterminer la position d'une déformation et donc quelle fibre ou partie de fibre a été déformée et donc quelle bouée est dégradée.

Dans un autre mode de réalisation, la ou les fibres optiques de différents éléments support d'une pluralité de bouées en enfilade ou chapelet n'est ou ne sont pas reliés en série et sont aptes à être connectés à des ombilicaux de transmission des signaux optiques différents.

Alternativement, si chaque élément support bouée possède sa fibre ou son propre réseau de fibres non reliés en série entre les différentes bouées, il suffit de venir se connecter à tour de rôle avec un ombilical sur la ou les fibres optiques de chacun des éléments supports.

Avantageusement le matériau de flottabilité de la bouée peut être un matériau présentant en outre des propriétés d'isolant thermique tel que de la mousse syntactique.

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'une conduite sous-marine de liaison fond surface 1 équipée d'une pluralité de bouées 2 en chapelet à laquelle s'applique le procédé de surveillance selon l'invention ;
- la figure 2 est une vue schématique d'un ensemble la d'éléments unitaire 1b de conduite sous-marine reliés entre eux par des éléments de jonction tubulaires 1c équipé de 3 bouées 2 ;
- les figures 2A et 2B représentent deux variantes de réalisation d'un élément tubulaire de jonction 1b, l'un (figure 2A) avec une collerette périphérique 5a et l'autre (figure 2B) avec un épaulement périphérique 5b faisant toute la circonférence de la surface externe du dit élément tubulaire de jonction 1c pour la fixation d'une bouée sur une conduite contre la collerette 5a au niveau d'un extrémité de la bouée (figure 2A), et autour et contre l'épaulement 5b au niveau d'une partie cylindrique 6b de la surface de la cavité interne centrale de révolution 6 de la bouée (figure 2B) ;
- les figures 3A et 3B, sont des vues schématiques de disposition d'une fibre optique 3 à la surface externe d'une bouée 2 selon une disposition hélicoïdale 3a (figure 4A) ou sinusoïdale 3b (figure 4B) ;
- les figures 4A et 4B, sont des vues schématiques de disposition de plusieurs fibres optiques 3 à la surface externe d'une bouée 2 selon une disposition rectiligne 3d en vue de côté (figure 4A) et en coupe transversale (figure 4B) ;
- les figures 5A, 5B et 5C, sont des vues schématiques de la fixation d'une bouée 2 sur une conduite 1 contre une pièce rigide de retenue 5 via une pièce de butée intercalaire 4 soumise à la poussée de la bouée, la dite pièce de butée intercalaire 4 de forme annulaire étant disposée entre une surface d'appui d'une partie de la bouée et (a) une collerette supérieure 5a (figure 5A), (b) un épaulement 5b (figure 5B) ou (c) une collerette inférieure 5c (figure 5C) ;
- les figures 6A et 6B, sont des vues schématiques d'une pièce de butée intercalaire 4 avec une fibre optique en surface externe selon une disposition hélicoïdale 3a (figure 6A) ou sinusoïdale ou en ondulations ou en zig-zag 3b (figure 6B) ; et
- les figures 7A - 7C, sont des vues schématiques en coupes en éclatée partielle d'une bouée avec une pièce de butée intercalaire 4 de forme annulaire en sous-face d'une pièce de retenue périphérique médiane 5 fixée autour de la conduite (figure 7A) et avec la forme creuse cylindrique 6b de la cavité interne centrale de révolution 6 de la bouée (figure 7B), et une demi-pièce de retenue 1c, pièce de butée 4 et une fibre optique 3a ou 3b non intégrées (figure 7C).

### Description détaillée de l'invention

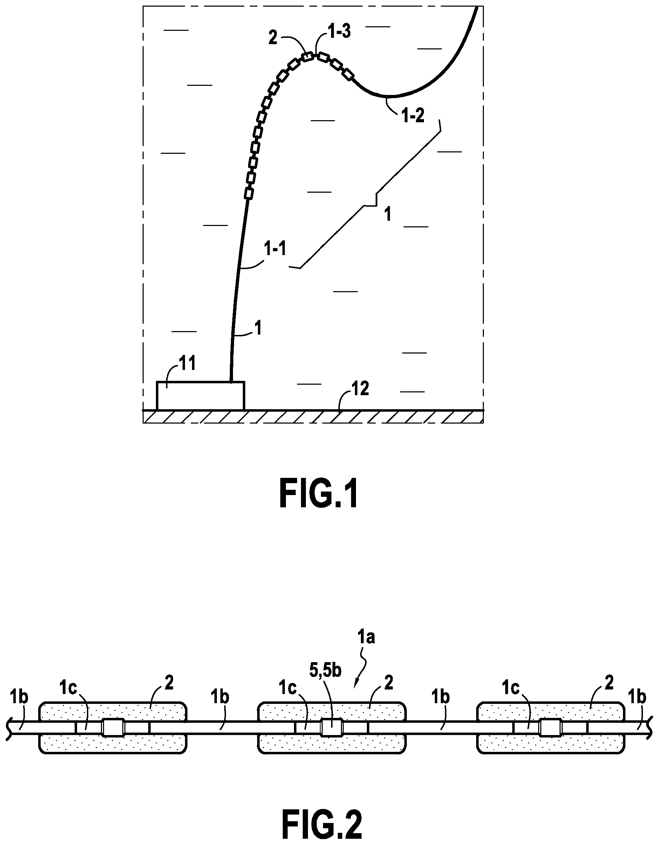

L'invention s'applique à toute conduite sous-marine de liaison fond surface requérant un tensionnement de la conduite, notamment une conduite assurant un transport entre des équipements 11 coopérant avec des puits de production d'hydrocarbures sous-marins, notamment de pétrole et de gaz, et une installation de surface, telle que la conduite sous-marine 1 représentée sur la figure 1.

La conduite sous-marine 1 représentée sur la figure 1 est du type constituée par une portion de conduite rigide 1-1 du type à tube acier unique s'étendant depuis un équipement 11 au fond de la mer 12 jusqu'en subsurface où elle est reliée 1-3 à l'extrémité d'une portion de conduite flexible 1-2 remontant en surface en formant une double chainette plongeante. Le tensionnement de ce type de conduite est réalisé par des chapelets de flotteurs en forme de bouées cylindriques coaxiales 2 montées autour de la conduite sur une portion de sa longueur.

Par ailleurs, la portion de conduite sous-marine rigide 1-1 peut être une conduite coaxiale de type « Pipe in Pipe » (ou « PIP »), c'est-à-dire que chaque élément unitaire de conduite 1b ou 1c comprend un tube en acier interne destiné à transporter les hydrocarbures issus de puits de production et un tube en acier externe, coaxial au tube interne et appelé « enveloppe externe », celle-ci pouvant être recouverte d'un revêtement anticorrosion qui est en contact direct avec l'eau environnante.

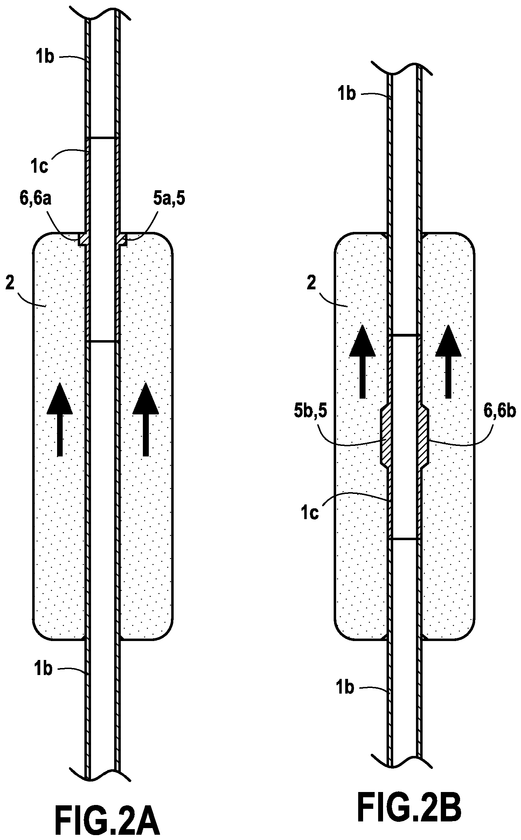

Les portions de conduites rigides 1-1 sont typiquement assemblées par soudage de rames ou ensemble d'éléments unitaires de conduite la assemblés à terre comprenant plusieurs sections de conduite de longueur unitaire 1b de l'ordre de 10 à 100 m selon la capacité de tenue du système de pose. On parle notamment également de « joints », notamment de « quadruple joints » (« quadjoints ») pour une rame de quatre éléments unitaires de conduite assemblés entre eux comme montré figure 2. Ces rames la d'éléments unitaires 1b sont raccordés les uns aux autres à bord du navire et au fur et à mesure de leur pose en mer.

Dans tous les cas, la bouée doit transmettre son effort de traction sur une surface d'appui solidaire de la conduite et cela peut se faire localement soit par serrage sur la surface extérieure de la conduite soit par blocage au niveau d'une surface d'une pièce rigide de retenue 5 solidaire de la conduite reprenant l'effort de poussée pour la transmettre à la conduite.

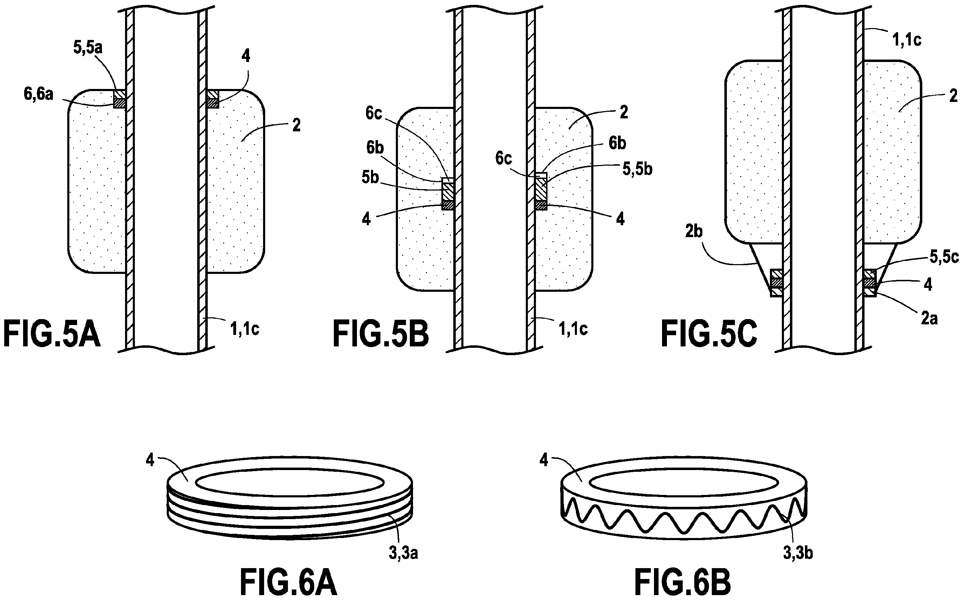

On peut donc mettre en œuvre plusieurs moyens de fixation des bouées cylindriques coaxiales 2 autour d'une conduite 1, à savoir :
- la bouée 2 peut être fixée par friction contre la surface externe de la conduite au moyen d'un élément de serrage applicable pour les conduites rigides en acier ou pour les conduites flexible, ou
- la bouée peut être bloquée en position par une pièce rigide de retenue 5 constituée d'une collerette 5a, 5c ou épaulement 5b applicable pour une conduite rigide en acier comme montré figures 2A et 2B la dite pièce rigide de retenue 5 coopérant éventuellement avec une pièce de butée intercalaire 4 comme montré figures 5A-5C. Chaque bouée 2 est alors positionnée et fixée autour d'un épaulement 5b et/ou contre une collerette 5a ou 5c et/ou pièce de butée intercalaire 4 au niveau de la surface externe de la conduite 1.

Le nombre et la position des bouées 2 le long d'une conduite peuvent varier selon la méthode de pose, la profondeur, le type de conduite à poser etc.

Pour le cas de bouées fixées sur conduite rigide au moyen d'un épaulement 5b ou collerette 5a ou 5c, typiquement on réalise une répartition par exemple de 3 bouées 2 par quad joint la avec un épaulement 5b ou collerette 5a sur chaque élément tubulaire de jonction 1c assurant la jonction entre chaque élément unitaire de conduite 1b comme montré figure 2 pour l'épaulement 5b. Dans ce cas, la surface interne cylindrique 6 formant la cavité centrale de la bouée 2 doit de préférence présenter une partie de sa surface de forme complémentaire à celle de l'ensemble pièce rigide de retenue 5- pièce de butée intercalaire 4 pour être bloquée en translation dans la direction et le sens de la poussée de la bouée.

Sur la figure 2A, la bouée 2 est bloquée en translation par une collerette périphérique supérieure 5a protubérante en surface d'un élément tubulaire de jonction 1c entre deux éléments unitaires de conduite 1b. La partie supérieure de la surface interne cylindrique 6 comporte un redan 6a qui coopère avec la forme complémentaire de la collerette 5a pour bloquer en translation la bouée 2 dans le sens et la direction de la poussée verticale qu'elle exerce sur la conduite 1.

Dans le mode de réalisation de la figure 2B, la bouée 2 est bloquée en translation dans le sens de la poussée verticale par rapport à la conduite 1b par un épaulement périphérique en protubérance 5b de la surface externe d'un élément tubulaire de jonction 1c sensiblement dans la partie médiane de la longueur de la surface cylindrique interne 6 de la cavité centrale de la bouée 2 au niveau d'un décroché 6b de cette surface interne 6 forme complémentaire.

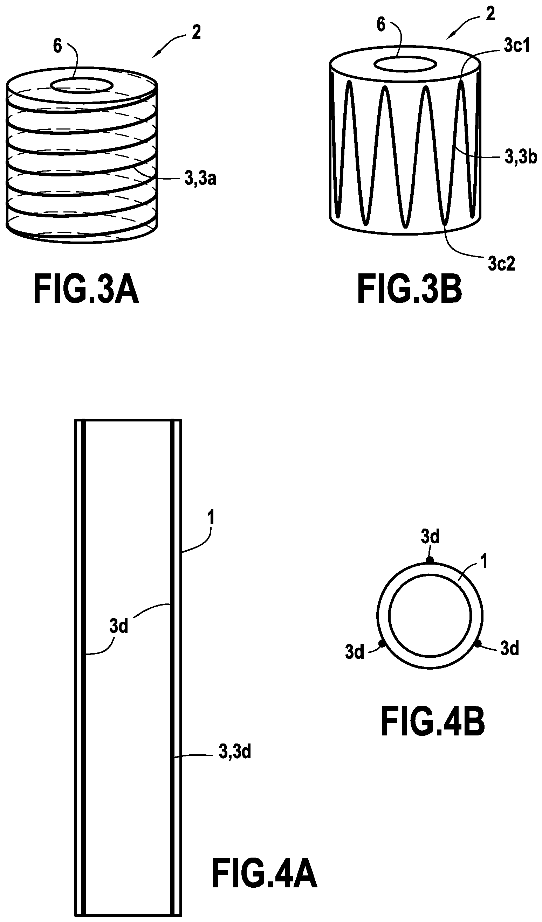

Sur les figures 3A et 3B, on a représenté deux modes de disposition d'une fibre optique 3 collée en surface ou noyée en proximité de la surface externe cylindrique de la bouée 2, à savoir une disposition sous forme d'hélice 3a pour la figure 3A et une disposition de forme sinusoïdale 3b pour la figure 3B.

L'hélice 3a de la figure 3A comportera au moins un pas, de préférence au moins 3 pas ou tours sur la longueur (hauteur) de la bouée. Un plus grand nombre de tours et donc un plus faible angle de pas de l'hélice augmentent la sensibilité de la mesure au regard de la déformation de la bouée, à savoir au regard de la diminution de la longueur de la bouée liée à une diminution de la compression que la bouée subit.

S'agissant de la forme sinusoïdale 3b de la figure 3B, avantageusement les parties de la fibre s'étendant dans la direction axiale longitudinale de la bouée entre les deux points d'amplitudes maximale 3c1 et minimale 3c2 de la sinusoïde, seront proches de la verticale, c'est-à-dire faiblement inclinées par rapport à la verticale pour avoir le plus grand nombre de périodes de la sinusoïde le long de la circonférence de la bouée en section transversale de celle-ci. La fibre optique sinusoïdale 3b s'étend de préférence avec ces points d'amplitude maximale 3c1 et minimale 3c2 à proximité des extrémités longitudinales de la bouée d'une part, et, d'autre part, la courbe sinusoïdale comprend de préférence au moins quatre périodes le long de la circonférence en section transversale de la bouée.

Sur les figures 5A-5C et 6A-6B, on a représenté un mode de réalisation préféré dans lequel on met en œuvre une pièce de butée intercalaire 4 en matériau élastique déformable tel que du caoutchouc comprimée de par la force de poussée exercée par la bouée. La dite pièce de butée intercalaire 4 est de forme annulaire et intercalée entre la surface interne 6a,6b de la cavité centrale 6 de la bouée et une pièce de retenue 5 contre laquelle la pièce de butée 4 est fixée, la pièce de retenue 5 étant constituée d'une collerette supérieure 5a sur la figure 5A, une collerette inférieure 5c sur la figure 5C et un épaulement 5b sur la figure 5B.

Dans les trois modes de réalisation des figures 5A à 5C, la pièce de butée intercalaire 4 de forme annulaire telle que représentée sur les figures 6A et 6B présente une fibre optique 3 collée en surface ou noyée dans la masse de forme hélicoïdale 3a sur la figure 6A et de forme sinusoïdale 3b le long de la circonférence de ladite pièce sur la figure 6B.

Sur la figure 5A, la pièce de butée intercalaire 4 est disposée en sous-face d'une collerette périphérique supérieure 5a. Et, la partie supérieure 6a de la surface cylindrique interne 6 de la bouée 2 présente une forme complémentaire à l'ensemble de la pièce de butée intercalaire 4 et de la pièce rigide de retenue en forme de collerette 5a, de manière à bloquer la translation relative vers le haut de ladite bouée 2 par rapport à la conduite 1 autour et contre laquelle elle est montée.

De même, sur la figure 5B, la pièce de butée intercalaire 4 est montée en sous-face de l'épaulement 5b, la surface interne cylindrique 6 de la bouée 2 présentant sur sa partie médiane en vis-à-vis de l'ensemble de l'épaulement 5b et de la pièce intercalaire 4a une forme complémentaire creuse 6b épousant et coopérant avec la forme de l'ensemble de la pièce intercalaire 4 et de l'épaulement 5b, de manière à bloquer toute translation relative vers le haut de la bouée 2 par rapport à la conduite 1 et comprimer la pièce de butée intercalaire 4 sous l'effet de la dite poussée de la bouée 2.

Sur la figure 5C, on a représenté un mode de réalisation dans lequel la bouée 2 est fixée à la conduite 1 au niveau d'un élément de serrage formant un anneau en acier 2a, appliqué co-axialement contre la conduite 1 à l'extrémité inférieure d'un cône de liaison 2b en partie inférieure de la bouée 2. Une pièce de butée intercalaire 4 de forme annulaire est comprimée sous l'effet de la poussée de la bouée entre la pièce de fixation 2a et une collerette périphérique inférieure 5c en sous-face de laquelle est positionnée la pièce de butée intercalaire 4.

Dans les trois modes de réalisation des figures 5A à 5C, la pièce de butée intercalaire 4 se trouve donc comprimée contre une collerette 5a ou 5c ou un épaulement 5b du fait de la poussée exercée par la bouée 2 et donc la hauteur de la pièce de butée 4 de par son élasticité augmente de longueur quand la poussée de la bouée diminue.

Sur la figure 5B, la forme du décroché 6b de la surface interne de la cavité centrale 6 de la bouée autorise une telle déformation de la pièce 4 au cours du temps avec un espace initial 6c au-dessus de l'épaulement 5b.

Dans le cas de mise en place de fibres optiques sur les bouées 2 ou les pièces de butée intercalaire 4, les fibres optiques 3 peuvent être positionnées sur la surface externe ou de préférence noyées dans le matériau constitutif de la bouée 2 ou pièce intercalaire 4.

Sur les figures 4A et 4B, on a représenté un mode de réalisation dans lequel trois fibres optiques 3d sont disposées directement collées en surface externe de la conduite 1 ou noyées dans un revêtement thermoplastique en surface de la conduite 1, les fibres 3d étant disposées de façon rectiligne dans la direction longitudinale de la conduite et disposés en triangle en section transversale. Ces fibres rectilignes 3d peuvent être capables de suivre une déformation en élongation de ladite conduite 1 en acier, permettant une mesure de la variation de la poussée de la bouée en l'absence de fibres optiques sur les bouées 2 ou pièces intercalaires 4.

Toutefois, les fibres optiques rectilignes 3d disposées sur la conduite 1 ou une butée 2 viendront en complément aux fibres 3a, 3b appliquées sur ou dans la pièce intercalaire 4. Dans le cas où la fibre optique 3 est disposée en continu sur la conduite uniquement, ou sur la conduite 1 et sur la bouée 2 ou pièce de butée intercalaire 4, du fait du temps de retour du signal et sachant la vitesse de la lumière (du signal laser), et du pas d'hélice ou période de la sinusoïde (si fibre posée en hélice ou sinusoïde), on peut déterminer la localisation d'une déformation de la fibre.

Avantageusement encore, au moins une fibre rectiligne 3d sur la conduite 1 servira d'ombilical de transmission connecté aux fibres 3a, 3b appliquées sur ou dans les pièces de butée intercalaire 4.

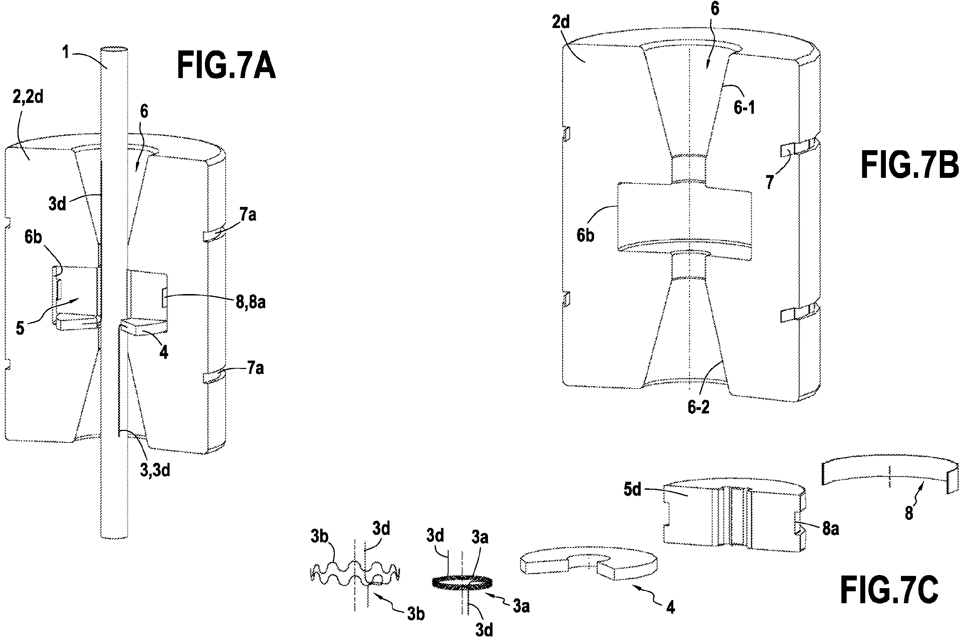

Sur la figure 7A, on a représenté un mode de réalisation dans lequel la bouée 2 est formée de deux demi-coques demies cylindriques 2d avec une seule représentée, les deux demi-bouées étant fixées l'une contre l'autre et contre la conduite 1 par une ceinture de serrage 7 dans une rainure périphérique externe 7a de la bouée. La fibre optique 3, 3a-3b est noyée dans la masse d'une pièce de butée intercalaire déformable élastiquement 4 de forme annulaire. La pièce de butée intercalaire 4 (représentée au trois-quarts figure 7A) est disposée en sous-face d'une pièce de retenue rigide annulaire par exemple en acier médiane 5d formant un épaulement rapporté. La pièce de retenue rigide 5d peut être elle-même formée de deux demi-pièces de retenue demies cylindriques rapportées et fixées l'une contre l'autre et contre la conduite 1 par une ceinture ou clamp 8 dans une rainure périphérique externe 8a de la dite pièce de retenue rigide annulaire en acier (par exemple). La figure 7B montre la paroi interne 6b cylindrique de la cavité centrale 6 de forme complémentaire à l'ensemble de la pièce de retenue 5d et pièce de butée intercalaire déformable 4. La figure 7C montre une demi-pièce de retenue 5d demie-cylindrique, une partie de ceinture 8, une partie de pièce intercalaire 4 et une fibre hélicoïdale 3a ou sinusoïdale ou en ondulations ou en zig-zag 3b se prolongeant par deux fibres rectilignes 3d longeant la conduite 1 pour rejoindre une bouée au-dessus et respectivement au-dessous. On notera que sur les figures 5B-5C et figure 7A, la pièce de butée élastique 4 est ici représentée dans sa position d'extension maximale de sorte que l'ensemble des pièces 4 et 5 occupe tout l'espace interne de la partie de forme cylindrique 6b de la cavité interne centrale de révolution 6 de la bouée. D'autre part, les parties supérieure 6-1 et inférieure 6-2 coniques de la dite cavité 6 ont ici pour fonction de tolérer une flexion de la conduite à l'intérieur de la bouée 2 en cas de courbure comme montré figure 1.

Les flotteurs 2 peuvent être indépendamment solidaires chacun de la conduite et coaxiaux à la conduite comme représentés sur les figures. Mais, ils peuvent aussi être constitués d'une pluralité de flotteurs. La mesure du signal optique peut se faire indifféremment avec des fibres à réseaux de Bragg ou en diffusion de type Brillouin non coaxiaux mais fixés sur des modules de flottabilité et / ou formant des modules de flottabilité coaxiaux eux-mêmes fixés coaxialement à la conduite.

La mesure du signal optique peut se faire indifféremment avec des fibres à réseaux de Bragg ou en diffusion de type Brillouin.

La fibre optique de chaque bouée 2 ou pièce intercalaire 4 peut être connectée à une même fibre principale longeant la conduite pour remonter l'information de toutes les bouées à un dispositif d'émission-réception - mesure de laser généralement à la surface.

Si chaque bouée 2 ou pièce de butée intercalaire 4 possède son propre réseau de fibres optiques 3 et connexion indépendamment des autres bouées (et non connecté à la conduite), on peut venir se connecter à tour de rôle avec un même ombilical de transmission de signal optique sur chacune des bouées ou pièces de butée intercalaire 4. Autrement, on amène un ombilical propre par bouée ou pièce de butée intercalaire 4 pour se connecter et récupérer l'information de déformation des différentes fibres sur les différentes bouées ou pièces de butée intercalaire. Enfin, si la bouée est en plusieurs éléments (par exemple deux demi-modules de bouée), il faut mettre en œuvre au moins une fibre par élément.

Lorsque c'est la déformation de la bouée qui est mesurée directement par l'intermédiaire de la déformation d'une fibre sur la bouée, cette déformation est due à la diminution de volume de la bouée au cours du temps (du fait de la dégradation de la bouée).

Dans le cas de mise en place de fibre optique 3 dans une dite pièce de butée intercalaire 4 notamment en caoutchouc, entre la bouée 2 et la pièce de retenue 5, la fibre optique est de préférence noyée dans le matériau élastique de la dite pièce de butée intercalaire et la mesure de la déformation se fera de préférence avec des fibres à réseau de Bragg car la déformation est très localisée, même si une mesure en Brillouin peut être applicable.

Dans le cas de mise en place de fibre optique sur la conduite, notamment en cas d'une pluralité de bouées 2 en chapelet, les fibres optiques sont soit collées à l'acier en surface de la conduite, ou collées sur ou noyées dans le revêtement thermoplastique anticorrosion de la conduite le cas échéant. L'élongation de la conduite due à la traction exercée par poussée de la bouée est mesurable par la fibre. La mesure de la déformation se fera de préférence en Brillouin car la mesure n'est pas locale, mais mesure une déformation globale sur une longueur de conduite. La fibre peut être posée sur la conduite de façon droite ou en hélice, ici c'est la déformation (l'élongation) de la conduite qu'on mesure, en effet l'élément est de moins en moins « tiré » au cours du temps par la bouée car il y a diminution de la poussée de la bouée au cours du temps. Si la fibre est posée de façon rectiligne ou en hélice sur la conduite ou dans un revêtement, il est préférable de positionner plusieurs fibres pour avoir une redondance de mesures, et connaitre l'élongation à différentes positions de la circonférence de la conduite.

Les fibres peuvent être noyées (ou collées) dans (ou sur) n'importe quel matériau déformable en fonction de la variation de poussée de la bouée. Concernant les bouées, elles sont généralement faites en mousse PU ou PP ou mousse syntactique, et la pièce intercalaire sera de préférence en matériau élastomère tel que du caoutchouc, mais tout autre matériau rigide déformable utilisable ou autre matériau élastique pour la pièce de butée intercalaire peut convenir.

De même concernant la pose sur la conduite, la conduite sera en général en acier, mais tout autre matériau composite ou synthétique rigide déformable en élongation dans les conditions de traction mise en œuvre (le cas échéant avec un revêtement anticorrosion ou isolant) est possible.

La pièce de butée intercalaire 4 aura à peu près la même dimension en diamètre externe que les collerette 5a, 5c ou épaulement 5b de la conduite contre lesquelles elle est appliquée soit en pratique une dimension correspondant à une surépaisseur dans la direction radiale par rapport à la conduite de 5 à 50 mm pour une conduite de 10 à 50 cm de diamètre. De même, la pièce de butée intercalaire 4 aura à peu près la même dimension dans la direction de poussée, c'est-à-dire en l'espèce la direction verticale ou direction longitudinale axiale de la bouée cylindrique, soit en pratique de 5mm à 50 mm, pour que les variations des efforts de poussée transmis de la bouée et/ou pièce intercalaire 4 sur la dite pièce rigide de retenue 5 et/ou la conduite 1 soient suffisamment élevées pour être mesurables.

## Revendications

1. Procédé de surveillance de la variation au cours du temps de la poussée exercée par au moins une bouée (2) montée sur une conduite sous-marine (1) de liaison fond-surface et exerçant une traction sur la dite conduite, comprenant la réalisation des étapes suivantes dans lesquelles :
1) on mesure la déformation d'au moins une fibre optique (3) en mesurant la variation d'un signal optique dans la fibre optique par rapport à une valeur de référence du signal optique, la dite fibre optique s'étendant au moins en partie dans une direction ayant une composante parallèle à la direction de la force de poussée exercée par la dite bouée sur la dite conduite, la dite fibre optique étant appliquée solidairement, par collage sur la surface ou de préférence noyée solidairement dans la masse d'un matériau constitutif d'au moins une pièce de butée (4) solidaire de ladite conduite ou de la bouée et sur laquelle la dite bouée exerce la dite poussée, ladite pièce de butée étant une pièce de butée intercalaire déformable élastiquement, disposée entre (i) une partie (6a, 6b) de la bouée et (ii) une pièce rigide de retenue (5, 5a-5d) solidaire de la dite conduite, la poussée exercée par ladite bouée venant comprimer la dite pièce de butée intercalaire (4), et
2) on détermine une variation de la dite poussée exercée par la dite bouée en fonction de ladite variation du signal optique telle que mesurée à l'étape 1) par rapport à une valeur de référence du signal optique correspondant à une poussée initiale maximale de la bouée.

2. Procédé selon la revendication 1, **caractérisé en ce que** la dite fibre optique est disposée dans ou à la surface d'une dite pièce de butée (4) qui est une pièce de butée intercalaire déformable élastiquement, en matériau élastomère, la dite bouée étant appliquée contre la pièce intercalaire initialement comprimée, et on détermine une diminution de la poussée de la bouée au cours du temps par expansion élastique de la dite pièce intercalaire découlant de la diminution de la compression et variation de volume de la pièce de butée intercalaire, la dite bouée étant constituée d'un matériau de flottabilité plus rigide que celui de la pièce de butée intercalaire et qui ne connait pas de déformation en élongation en cas de dégradation se traduisant par une diminution de la poussée exercée par ladite bouée.

3. Procédé selon la revendication 1 ou 2, **caractérisé en ce que** la dite bouée est de forme en partie cylindrique ou pseudo-cylindrique disposée autour de la conduite et coaxialement à celle-ci.

4. Procédé selon les revendications 2 et 3, **caractérisé en ce qu'**une dite cavité centrale (6) de la bouée traversée par la conduite présente une partie de paroi (6a, 6b) de forme complémentaire à la forme de ladite pièce rigide de retenue (5, 5a-5d) apte à bloquer la bouée en translation dans la direction longitudinale de la conduite.

5. Procédé selon la revendication 3 ou 4, **caractérisé en ce que** la dite pièce rigide de retenue (5) est constituée par une collerette périphérique supérieure en acier (5a) entourant la dite conduite et servant de retenue en position de la dite bouée disposée coaxialement autour de la conduite et dessous ladite collerette, la dite pièce intercalaire de butée (4) de forme annulaire étant disposée coaxialement en sous face de la dite pièce rigide de retenue.

6. Procédé selon la revendication 3 ou 4, **caractérisé en ce que** la dite pièce rigide de retenue (5) est constituée par une collerette périphérique inférieure en acier (5c) entourant la dite conduite et servant de retenue en position de la dite bouée disposée coaxialement autour de la conduite et dessus ladite collerette, la dite pièce intercalaire de butée (4) de forme annulaire étant disposée coaxialement en sous face de la dite pièce rigide de retenue.

7. Procédé selon la revendication 3 ou 4, **caractérisé en ce que** la dite pièce rigide de retenue (5) est constituée par un épaulement (5b, 5d) en acier en surface de la conduite, l'ensemble du dit épaulement et de la dite pièce intercalaire de butée (4) de forme annulaire disposée coaxialement en sous face de la dite pièce rigide de retenue coopérant avec une forme creuse complémentaire d'une surface interne (6b) de la cavité centrale (6) de la dite bouée en vis-à-vis de la surface externe de la conduite, le dit épaulement servant de retenue en position de la dite bouée disposée coaxialement et autour de la conduite et du dit épaulement.

8. Procédé selon l'une quelconque des revendications 1 à 7, **caractérisé en ce que** la fibre s'étend hélicoïdalement (3a) et coaxialement en surface ou à l'intérieur de la dite pièce de butée.

9. Procédé selon l'une quelconque des revendications 1 à 7, **caractérisé en ce que** la fibre optique s'étend sinusoïdalement ou en ondulations ou en zig-zag (3b) le long d'une partie au moins de la circonférence, de préférence toute la circonférence, en surface ou à l'intérieur de la dite pièce de butée.

10. Procédé selon l'une des revendications 1 à 7, **caractérisé en ce que** la fibre optique s'étend sur une surface torique par enroulement de la fibre sur une surface torique virtuelle ou sur un support torique de diamètre inférieur à l'épaisseur de la dite pièce de butée, noyée dans ladite pièce de butée intercalaire.

11. Procédé selon l'une des revendications 1 à 10, **caractérisé en ce qu'**à l'étape 1), on mesure la déformation d'au moins une fibre optique en utilisant au moins la rétrodiffusion de Brillouin ou une fibre optique à réseaux de Bragg, en mesurant la variation de la fréquence de l'onde rétrodiffusée ou respectivement la variation de la longueur d'onde de l'onde réfléchie du signal optique réfléchi dans la fibre optique par rapport à une valeur de référence du signal optique de l'onde rétrodiffusée ou respectivement de l'onde réfléchie, et de préférence on associe à la dite fibre optique une fibre du type à effet Raman.

12. Installation de liaison fond-surface utile dans un procédé selon l'une quelconque des revendications 1 à 11, comprenant une conduite sous-marine (1) de liaison fond-surface équipée d'au moins une bouée (2) exerçant une traction sur la dite conduite, et au moins une fibre optique (3) apte à permettre de mesurer sa déformation en mesurant la variation d'un signal optique dans la fibre optique par rapport à une valeur de référence du signal optique, la dite fibre optique s'étendant au moins en partie dans une direction ayant une composante parallèle à la direction de la force de poussée exercée par la dite bouée sur la dite conduite, la dite fibre optique étant appliquée solidairement, de préférence par collage sur la surface ou de préférence noyée solidairement dans la masse d'un matériau constitutif d'au moins une pièce de butée (4) solidaire de ladite conduite ou de la bouée et sur laquelle la dite bouée exerce la dite poussée, ladite pièce de butée étant une pièce de butée intercalaire déformable élastiquement, disposée entre (i) une partie (6a, 6b) de la bouée et (ii) une pièce rigide de retenue (5, 5a-5d) solidaire de la dite conduite, la poussée exercée par ladite bouée venant comprimer la dite pièce de butée intercalaire (4), et
- la dite fibre optique est connectée à une fibre optique (7) véhiculant le signal optique, de préférence le long de la conduite.

13. Installation selon la revendication 12, **caractérisée en ce qu'**elle comprend une pluralité de dites bouées de forme en partie cylindrique ou pseudo-cylindrique disposées en enfilade ou espacées en chapelet autour de la conduite et coaxialement à elle, et au moins une fibre optique pour mesurer la poussée de respectivement chaque bouée, de préférence une même fibre optique pour toutes les bouées.

14. Installation selon la revendication 12 ou 13, **caractérisée en ce que** la ou chaque bouée (2) est constituée de plusieurs éléments de bouée, de préférence sous forme de deux demi modules de bouée de formes demi cylindrique (2-1, 2-2), aptes à être disposés l'un vis à vis de l'autre de manière à entourer la conduite.

15. Installation selon l'une des revendications 12 à 14, **caractérisée en ce que** la bouée comprend au moins une fibre optique disposée dans ou à la surface d'une dite pièce de butée intercalaire déformable élastiquement (4) qui est de forme annulaire et en matériau élastomère, la poussée exercée par ladite bouée venant comprimer la dite pièce de butée intercalaire (4), ladite partie (6a, 6b) de dite cavité centrale (6) de la bouée présentant une forme complémentaire à la forme de l'ensemble de la dite pièce de butée (4) et de ladite pièce rigide de retenue (5, 5a-5d) apte à bloquer la bouée en translation dans la direction longitudinale de la conduite.

16. Installation selon la revendication 15, **caractérisée en ce que** la dite bouée est appliquée contre la pièce intercalaire initialement comprimée, la dite bouée étant constituée d'un matériau de flottabilité plus rigide que celui de la dite pièce de butée intercalaire et qui ne connait pas de déformation en élongation en cas de dégradation se traduisant par une diminution de la poussée exercée par ladite bouée.

17. Installation selon l'une des revendications 12 à 16, **caractérisée en ce que** la ou les fibres optiques de différentes dites pièces de butée d'une pluralité de bouées en enfilade ou chapelet est ou sont reliés en série et à un même ombilical de transmission des signaux optiques à un dispositif d'émission - réception et mesure de signal optique, de préférence en surface.

## Patentansprüche

1. Verfahren zur Überwachung der zeitlichen Variation des Auftriebs, der von mindestens einer Boje (2) ausgeübt wird, die an einer Unterwasserleitung (1) für eine Grund-Oberfläche-Verbindung montiert ist und eine Zugkraft auf die genannte Leitung ausübt, umfassend die Durchführung der folgenden Schritte, in welchen:
1) die Verformung mindestens einer optischen Faser (3) gemessen wird, indem die Variation eines optischen Signals in der optischen Faser in Bezug auf einen Referenzwert des optischen Signals gemessen wird, wobei sich die genannte optische Faser mindestens teilweise in einer Richtung erstreckt, die eine Komponente parallel zu der Richtung der Auftriebskraft aufweist, die von der genannten Boje auf die genannte Leitung ausgeübt wird, wobei die genannte optische Faser durch Aufkleben auf die Fläche fest verbunden aufgebracht wird oder vorzugsweise in der Masse eines Bestandteilmaterials mindestens eines Anschlagstücks (4) fest verbunden eingebettet wird, das mit der genannten Leitung oder der Boje fest verbunden wird, und auf das die genannte Boje den genannten Auftrieb ausübt, wobei das genannte Anschlagstück ein elastisch verformbares Zwischenanschlagstück ist, das zwischen (i) einem Abschnitt (6a, 6b) der Boje und (ii) einem steifen Haltestück (5, 5a-5d) angeordnet ist, das mit der genannten Leitung fest verbunden ist, wobei der Auftrieb, der von der genannten Boje ausgeübt wird, das genannte Zwischenanschlagstück (4) zusammendrückt, und
2) eine Variation des genannten Auftriebs, der von der Boje ausgeübt wird, bestimmt wird als Funktion der genannten Variation des optischen Signals, wie in Schritt 1) gemessen, in Bezug auf einen Referenzwert des optischen Signals, der einem maximalen Anfangsauftrieb der Boje entspricht.

2. Verfahren nach Anspruch 1, **dadurch gekennzeichnet, dass** die genannte optische Faser in oder an der Fläche eines genannten Anschlagstücks (4) angeordnet wird, das ein elastisch verformbares Zwischenanschlagstück aus einem elastomeren Material ist, wobei die genannte Boje gegen das anfänglich zusammengedrückte Zwischenstück angelegt wird, und eine zeitliche Verringerung des Auftriebs der Boje durch die elastische Dehnung des genannten Zwischenstücks bestimmt wird, die aus der Verringerung der Kompression und der Variation des Volumens des Zwischenanschlagstücks resultiert, wobei die genannte Boje aus einem schwimmfähigen Material besteht, das steifer ist als jenes des Zwischenanschlagstücks, und das keine Dehnungsverformung im Fall eines Abbaus eingeht, die zu einer Verringerung des Auftriebs führt, der von der genannten Boje ausgeübt wird.

3. Verfahren nach Anspruch 1 oder 2, **dadurch gekennzeichnet, dass** die genannte Boje eine teilweise zylindrische oder pseudo-zylindrische Form aufweist, die um die Leitung und koaxial damit angeordnet ist.

4. Verfahren nach den Ansprüchen 2 und 3, **dadurch gekennzeichnet, dass** ein genannter zentraler Hohlraum (6) der Boje, der von der Leitung durchquert wird, einen Wandabschnitt (6a, 6b) mit einer komplementären Form zu der Form des genannten steifen Haltestücks (5, 5a-5d) aufweist, der dafür geeignet ist, um die Boje in der Längsrichtung der Leitung translatorisch zu blockieren.

5. Verfahren nach Anspruch 3 oder 4, **dadurch gekennzeichnet, dass** das genannte steife Haltestück (5) aus einem oberen peripheren Stahlflansch (5a) gebildet wird, der die genannte Leitung umgibt und als Halterung in der Position der genannten Boje dient, die koaxial um die Leitung und unter dem genannten Flansch angeordnet ist, wobei das Zwischenanschlagstück (4) mit einer Ringform koaxial an der Unterseite des genannten steifen Haltestücks angeordnet ist.

6. Verfahren nach Anspruch 3 oder 4, **dadurch gekennzeichnet, dass** das genannte steife Haltestück (5) aus einem unteren peripheren Stahlflansch (5c) gebildet wird, der die genannte Leitung umgibt und als Halterung in der Position der genannten Boje dient, die koaxial um die Leitung und über dem genannten Flansch angeordnet ist, wobei das Zwischenanschlagstück (4) mit einer Ringform koaxial an der Unterseite des genannten steifen Haltestücks angeordnet ist.

7. Verfahren nach Anspruch 3 oder 4, **dadurch gekennzeichnet, dass** das genannte steife Haltestück (5) aus einer Stahlschulter (5b, 5d) an der Fläche der Leitung gebildet wird, wobei die Anordnung der genannten Schulter und des genannten Zwischenanschlagstücks (4) mit einer Ringform, das koaxial an der Unterseite des genannten steifen Haltestücks angeordnet ist, mit einer komplementären Hohlform einer Innenfläche (6b) des zentralen Hohlraums (6) der genannten Boje gegenüber der äußeren Fläche der Leitung zusammenwirkt, wobei die genannte Schulter als Halterung in der Position der genannten Boje dient, die koaxial und um die Leitung und die genannte Schulter angeordnet ist.

8. Verfahren nach einem der Ansprüche 1 bis 7, **dadurch gekennzeichnet, dass** sich die Faser schraubenförmig (3a) und koaxial an der Fläche oder im Inneren des genannten Anschlagstücks erstreckt.

9. Verfahren nach einem der Ansprüche 1 bis 7, **dadurch gekennzeichnet, dass** sich die optische Faser sinusförmig oder wellenförmig oder zickzackförmig (3b) entlang mindestens eines Teils des Umfangs, vorzugsweise des gesamten Umfangs, an der Fläche oder im Inneren des genannten Anschlagstücks erstreckt.

10. Verfahren nach einem der Ansprüche 1 bis 7, **dadurch gekennzeichnet, dass** sich die optische Faser an einer torischen Fläche durch Aufwickeln der Faser auf einer virtuellen torischen Fläche oder auf einem torischen Träger mit einem Durchmesser erstreckt, der kleiner ist als die Dicke des genannten Anschlagstücks, eingebettet in dem genannten Zwischenanschlagstück.

11. Verfahren nach einem der Ansprüche 1 bis 10, **dadurch gekennzeichnet, dass** in dem Schritt 1) die Verformung mindestens einer optischen Faser gemessen wird unter Verwendung mindestens der Brillouin-Rückstreuung oder einer optischen Faser mit Bragg-Gitter durch Messen der Variation der Frequenz der rückgestreuten Welle bzw. der Variation der Wellenlänge der reflektierten Welle des reflektierten optischen Signals in der optischen Faser in Bezug auf einen Referenzwert des optischen Signals der rückgestreuten Welle bzw. der reflektierten Welle, und vorzugsweise eine Raman-Effekt-Typ-Faser mit der genannten optischen Faser verbunden wird.

12. Anlage für eine Grund-Oberfläche-Verbindung, welche in einem Verfahren nach einem der Ansprüche 1 bis 11 geeignet ist, umfassend eine Unterwasserleitung (1) für eine Grund-Oberfläche-Verbindung, die mit mindestens einer Boje (2) ausgestattet ist, die eine Zugkraft auf die genannte Leitung ausübt, und mindestens eine optische Faser (3), die dafür geeignet ist, um zu gestatten, ihre Verformung durch Messen der Variation eines optischen Signals in der optischen Faser in Bezug auf einen Referenzwert des optischen Signals zu messen, wobei sich die genannte optische Faser mindestens teilweise in einer Richtung erstreckt, die eine Komponente parallel zu der Richtung der Auftriebskraft aufweist, die von der genannten Boje auf die genannte Leitung ausgeübt wird, wobei die genannte optische Faser durch Aufkleben auf die Fläche fest verbunden aufgebracht wird oder vorzugsweise in der Masse eines Bestandteilmaterials mindestens eines Anschlagstücks (4) fest verbunden eingebettet wird, das mit der genannten Leitung oder der Boje fest verbunden wird, und auf das die genannte Boje den genannten Auftrieb ausübt, wobei das genannte Anschlagstück ein elastisch verformbares Zwischenanschlagstück ist, das zwischen (i) einem Abschnitt (6a, 6b) der Boje und (ii) einem steifen Haltestück (5, 5a-5d) angeordnet ist, das mit der genannten Leitung fest verbunden ist, wobei der Auftrieb, der von der genannten Boje ausgeübt wird, das genannte Zwischenanschlagstück (4) zusammendrückt, und
- wobei die genannte optische Faser mit einer optischen Faser (7) verbunden ist, die das optische Signal trägt, vorzugsweise entlang der Leitung.

13. Anlage nach Anspruch 12, **dadurch gekennzeichnet, dass** sie eine Vielzahl der genannten Bojen mit einer teilweisen zylindrischen oder pseudo-zylindrischen Form, die in einer Reihe oder in einer Kette beabstandet um die Leitung und koaxial damit angeordnet sind, und mindestens eine optische Faser zum Messen des Auftriebs jeder Boje, vorzugsweise dieselbe optische Faser für alle Bojen, umfasst.

14. Anlage nach Anspruch 12 oder 13, **dadurch gekennzeichnet, dass** die oder jede Boje (2) aus mehreren Bojenelementen besteht, vorzugsweise in der Form von zwei Bojenhalbmodulen (2-1, 2-2) mit einer halbzylindrischen Form, die dafür geeignet sind, um einander gegenüber angeordnet zu werden, um die Leitung zu umgeben.

15. Anlage nach einem der Ansprüche 12 bis 14, **dadurch gekennzeichnet, dass** die Boje mindestens eine optische Faser umfasst, die in oder an der Fläche eines elastisch verformbaren Zwischenanschlagstücks (4) angeordnet ist, das eine Ringform aufweist und aus einem elastomeren Material besteht, wobei der Auftrieb, der von der genannten Boje ausgeübt wird, das genannte Zwischenanschlagstück (4) zusammendrückt, wobei der genannte Abschnitt (6a, 6b) des genannten zentralen Hohlraums (6) der Boje eine Form aufweist, die zu der Form der Anordnung des genannten Anschlagstücks (4) und des genannten steifen Haltestücks (5, 5a-5d) komplementär ist, die dafür geeignet ist, um die Boje in der Längsrichtung der Leitung translatorisch zu blockieren.

16. Anlage nach Anspruch 15, **dadurch gekennzeichnet, dass** die genannte Boje gegen das anfänglich zusammengedrückte Zwischenstück angelegt wird, wobei die genannte Boje aus einem schwimmfähigen Material besteht, das steifer ist jenes des genannten Zwischenanschlagstücks, und das keine Dehnungsverformung im Falle eines Abbaus eingeht, die zu einer Verringerung des Auftriebs führt, der von der genannten Boje ausgeübt wird.

17. Anlage nach einem der Ansprüche 12 bis 16, **dadurch gekennzeichnet, dass** die optische(n) Faser(n) verschiedener der genannten Anschlagstücke einer Vielzahl von Bojen in einer Reihe oder Kette in Serie und mit derselben Leitung zur Übertragung optischer Signale zu einer Sende-Empfangs- und Messvorrichtung für optische Signale verbunden ist oder sind, vorzugsweise an der Oberfläche.

## Claims

1. A method of monitoring variation over time in the thrust exerted by at least one buoy (2) mounted on an undersea bottom-to-surface connection pipe (1) and exerting traction on said pipe, the method comprising performing the following steps:
1) measuring the deformation of at least one optical fiber (3) by measuring the variation of an optical signal in the optical fiber relative to a reference value for the optical signal, said optical fiber extending at least in part in a direction having a component parallel to the direction of the thrust force exerted by said buoy on said pipe, said optical fiber being securely applied against the surface by adhesive, or preferably being securely embedded in the bulk of a material constituting at least an abutment part (4) secured to said pipe or to the buoy and against which said buoy exerts said thrust, said abutment part being an elastically deformable intermediate abutment part arranged between (i) a portion (6a, 6b) of the buoy and (ii) a rigid retaining part (5, 5a-5d) secured to said pipe, the thrust exerted by said buoy comprising said intermediate abutment part (4); and
2) determining a variation in said thrust exerted by said buoy as a function of said variation of the optical signal as measured in step 1) relative to a reference value for the optical signal corresponding to a maximum initial thrust from the buoy.

2. The method according to claim 1, **characterized in that** said optical fiber is arranged in or at the surface of a said abutment part (4), which is an elastically deformable intermediate abutment part, made of elastomer material, said buoy being pressed against the initially compressed intermediate part, and a reduction in the thrust from the buoy over time is determined by elastic expansion of said intermediate part resulting from a decrease in the compression and a variation in the volume of the intermediate abutment part, said buoy being made of a buoyant material that is more rigid than the material of the intermediate abutment part and that is not subjected to elongation deformation in the event of degradation giving rise to a decrease in the thrust exerted by said buoy.

3. The method according to claim 1 or 2, **characterized in that** said buoy is of part cylindrical or pseudo-cylindrical shape arranged coaxially around the pipe.

4. The method according to claims 2 and 3, **characterized in that** a said central cavity (6) in the buoy having the pipe passing therethrough presents a wall portion (6a, 6b) of shape complementary to the shape of said rigid retaining part (5, 5a-5d) and suitable for blocking movement in translation of the buoy in the longitudinal direction of the pipe.

5. The method according to claim 3 or 4, **characterized in that** said rigid retaining part (5) is constituted by a top peripheral collar (5a) made of steel surrounding said pipe and serving to hold in position said buoy arranged coaxially around the pipe and under said collar, said intermediate abutment part (4) of annular shape being arranged coaxially against the underface of said rigid retaining part.

6. The method according to claim 3 or 4, **characterized in that** said rigid retaining part (5) is constituted by a bottom peripheral collar (5c) made of steel surrounding said pipe and serving to hold in position said buoy arranged axially around the pipe and above said collar, said intermediate abutment part (4) of annular shape being arranged coaxially against the underface of said rigid retaining part.

7. The method according to claim 3 or 4, **characterized in that** said rigid retaining part (5) is constituted by a steel shoulder (5b, 5d) at the surface of the pipe, with the assembly of said shoulder and of said intermediate abutment part (4) of annular shape arranged coaxially against the underface of said rigid retaining part co-operating with a complementary hollow shape in an inside surface (6b) of the central cavity (6) of said buoy facing the outside surface of the pipe, said shoulder serving to hold in position said buoy arranged coaxially around the pipe and said shoulder.

8. The method according to any one of claims 1 to 7, **characterized in that** the fiber extends helically (3a) and coaxially on the surface of or inside said abutment part.

9. The method according to any one of claims 1 to 7, **characterized in that** the optical fiber extends sinusoidally or in undulations or as a zigzag (3b) around at least a portion of the circumference and preferably the entire circumference on the surface of or inside said abutment part.

10. The method according to any of claims 1 to 7, **characterized in that** the optical fiber extends over a toroidal surface by winding the fiber on a virtual toroidal surface or on a toroidal support of diameter smaller than the thickness of said abutment part, the toroidal surface being embedded in said intermediate abutment part.

11. The method according to any of claims 1 to 10, **characterized in that** in step 1), the deformation of at least one optical fiber is measured by using at least Brillouin backscattering or a Bragg grating optical fiber, by measuring variation in the frequency of the backscattered wave or respectively variation in the wavelength of the reflected wave from the optical signal reflected in the optical fiber compared with a reference value for the optical signal of the backscattered wave or respectively of the reflected wave, and preferably said optical fiber is associated with a fiber of the Raman effect type.

12. A bottom-to-surface connection installation suitable for use in a method according to any one of claims 1 to 11, the installation comprising a bottom-to-surface connection undersea pipe (1) fitted with at least one buoy (2) exerting traction on said pipe, and at least one optical fiber (3) suitable for measuring deformation of the pipe by measuring variation of an optical signal in the optical fiber relative to a reference value for the optical signal, said optical fiber extending at least in part in a direction having a component parallel to the direction of the thrust force exerted by said buoy on said pipe, said optical fiber being securely applied against the surface, preferably by adhesive or preferably being securely embedded in the bulk of a material constituting at least an abutment part (4) secured to said pipe or to the buoy and against which said buoy exerts said thrust, said abutment part being an elastically deformable intermediate abutment part arranged between (i) a portion (6a, 6b) of the buoy and (ii) a rigid retaining part (5, 5a-5d) secured to said pipe, the thrust exerted by said buoy compressing said intermediate abutment part (4); and
- said optical fiber is connected to an optical fiber (7) conveying the optical signal, preferably along the pipe.

13. The installation according to claim 12, **characterized in that** it comprises a plurality of said buoys of part cylindrical or pseudo-cylindrical shape arranged one after another or spaced apart in a string coaxially around the pipe, and at least one optical fiber for measuring the respective thrusts from each of the buoys, preferably a single optical fiber for all of the buoys.

14. The installation according to claim 12 or 13, **characterized in that** the or each buoy (2) is constituted by a plurality of buoy elements, preferably in the form of two buoy half-modules (2-1, 2-2) of semicylindrical shape suitable for being arranged facing each other so as to surround the pipe.

15. The installation according to any of claims 12 to 14, **characterized in that** the buoy has at least one optical fiber arranged in or at the surface of a said elastically deformable intermediate abutment part (4) that is of annular shape and made of elastomer material, the thrust exerted by said buoy compressing said intermediate abutment part (4), said portion (6a, 6b) of said central cavity (6) of the buoy presenting a shape that is complementary to the shape of the assembly of said abutment part (4) and said rigid retaining part (5, 5a-5d) suitable for blocking movement of the buoy in translation along the longitudinal direction of the pipe.

16. The installation according to claim 15, **characterized in that** said buoy is applied against the initially compressed intermediate part, said buoy being made of a buoyant material that is more rigid than the material of said intermediate abutment part and that is not deformed in elongation in the event of degradation that gives rise to a decrease in the thrust exerted by said buoy.

17. The installation according to any of claims 12 to 16, **characterized in that** the optical fiber(s) of various said abutment parts of a plurality of buoys in series or in a string is/are connected in series and to a common umbilical for transmitting the optical signals to an optical signal transceiver and measuring device that is preferably at the surface.
